# FASCICULE DE BREVET EUROPEEN

(11) **EP 3 289 860 B1**
(45) Date de publication et mention de la délivrance du brevet: **13.03.2019**
(21) Numéro de dépôt: 17187701.2
(22) Date de dépôt: 24.08.2017
(51) Int. Cl.: A01K 1/015

(54) **PROCEDE ET INSTALLATION D'EPANDAGE DE MATERIAUX DE LITIERE SUR UNE AIRE D'ELEVAGE**
VERFAHREN UND ANLAGE ZUM AUSBREITEN VON TIERSTREUMATERIAL AUF EINER TIERZUCHTFLÄCHE
METHOD AND FACILITY FOR SPREADING LITTER MATERIALS OVER A FARMING AREA

(30) Priorité: 31.08.2016 FR 1658073; 15.05.2017 FR 1754252
(43) Date de publication de la demande: 07.03.2018
(73) Titulaire: SARL Firstpellets, 86170 Maisonneuve (FR)
(72) Inventeur: VINEE, François, 86330 Saint Jean de Sauves (FR)
(74) Mandataire: Godineau, Valérie

(56) Documents cités:
- DE-A1- 3 204 604
- DE-A1- 3 718 663
- DE-B3-102012 208 585
- DE-U1-202010 016 688
- FR-A1- 2 775 417
- US-A- 2 538 886
- US-A- 5 957 394

## Description

### DOMAINE DE L'INVENTION

L'invention concerne un procédé et une installation d'épandage de matériaux de litière sur une aire d'élevage.

Elle concerne plus particulièrement une installation d'épandage de matériaux de litière sur une aire d'élevage, ladite installation comprenant :
- une trémie apte à recevoir un approvisionnement de matériaux de litière en vrac, ladite trémie comprenant un fond équipé de deux orifices de déchargement obturables et des parois latérales,
- un dispositif de distribution comprenant deux disques d'épandage montés sur un bâti support et des moyens d'entraînement en rotation des disques d'épandage, chaque disque d'épandage, équipé d'au moins une pale d'éjection radiale, s'étendant, en configuration d'utilisation de l'installation, au-dessous de l'un des orifices de déchargement de la trémie avec son axe de rotation vertical pour recevoir les matériaux de litière tombant par gravité de l'orifice de déchargement associé et les projeter au sol, le bâti support des disques d'épandage étant couplé à la trémie pour former un ensemble solidaire en déplacement, et,
- des moyens d'entraînement en déplacement de l'ensemble.

### ART ANTERIEUR

Un des objectifs permanents des éleveurs est l'automatisation des diverses tâches à accomplir dans l'activité d'élevage afin de réduire la main-d'oeuvre nécessaire ou mieux utiliser cette dernière, en particulier dans le cadre de tâches pénibles. C'est dans ce cadre que des installations autonomes d'épandage ont été développées. L'une des difficultés de telles installations réside dans leur capacité à s'adapter à des bâtiments dont la conception peut varier dans des proportions importantes d'un bâtiment à un autre. Pour résoudre cette difficulté, de telles installations sont généralement tractées ou poussées par un véhicule moteur avec les contraintes de pollution, d'encombrement et de conduite que cela engendre.

Une installation d'épandage dans laquelle un disque est disposé à l'intérieur d'une trémie équipée d'orifices de déchargement latéraux est connue comme l'illustre le document DE-20 2010 016 688 U.

Le document FR-2.775.417 décrit un autre mode de réalisation d'une installation d'épandage.

D'autres installations d'épandage sont également décrites dans les documents DE 10 2012 208585, US-2.538.886, US-5.957.394, DE 37 18 663 et DE 32 04 604.

### BUTS ET RESUME

Un but de l'invention est de proposer une installation d'épandage du type précité dont la conception permet de s'adapter à un grand nombre de bâtiments d'élevage.

Un autre but de l'invention est de proposer une installation d'épandage du type précité dont la conception permet d'une part, une variation de la largeur de travail, d'autre part, un franchissement aisé d'obstacles au sol

Un autre but de l'invention est de proposer une installation d'épandage du type précité dont la conception permet une répartition homogène des matériaux de litière sur une surface donnée.

A cet effet, l'invention a pour objet une installation d'épandage de matériaux de litière sur une aire d'élevage, suivant la revendication 1, ladite installation comprenant :
- une trémie apte à recevoir un approvisionnement de matériaux de litière en vrac, ladite trémie comprenant un fond équipé de deux orifices de déchargement obturables et des parois latérales,
- un dispositif de distribution comprenant deux disques d'épandage montés sur un bâti support et des moyens d'entraînement en rotation des disques d'épandage, chaque disque d'épandage, équipé d'au moins une pale d'éjection radiale, s'étendant, en configuration d'utilisation de l'installation, au-dessous de l'un des orifices de déchargement de la trémie avec son axe de rotation vertical pour recevoir les matériaux de litière tombant par gravité de l'orifice de déchargement associé et les projeter au sol, le bâti support des disques d'épandage étant couplé à la trémie pour former un ensemble solidaire en déplacement, et,
- des moyens d'entraînement en déplacement de l'ensemble,
   caractérisée en ce que les moyens d'entraînement en déplacement de l'ensemble sont des moyens d'entraînement en déplacement dudit ensemble le long d'un chemin de guidage prédéterminé, en ce que les disques d'épandage sont montés sur le bâti support réglables en position au moins dans le sens d'une variation de la distance entre les centres de disques et en ce que la trémie comprend, en sus des orifices de déchargement, deux sorties obturables de vidange de la trémie, disposées sur la trémie à un niveau supérieur à celui occupé par les orifices de déchargement à l'état posé de la trémie reposant par son fond au sol.

Le montage des disques sur le bâti support de manière réglable en position, en vue d'un rapprochement ou d'un écartement des disques d'épandage entre eux, permet de faire varier la largeur de travail. Le guidage de l'ensemble le long d'un chemin prédéterminé permet de s'affranchir de la présence d'un conducteur.

Selon un mode de réalisation de l'invention, l'installation comprend au moins un conduit raccordable à au moins l'une des sorties, de préférence à chacune des sorties de vidange.

La présence de ces deux sorties de vidange supplémentaires permet ainsi de raccorder un conduit à écoulement gravitaire à l'aide duquel un opérateur peut, sans effort physique important, parfaire le travail d'épandage réalisé à l'aide des disques pour obtenir une qualité de travail similaire à celle obtenue par épandage manuel.

Selon un mode de réalisation de l'invention, en configuration d'utilisation, à l'état ouvert d'au moins l'une des sorties de vidange, les disques d'épandage sont à l'arrêt, c'est-à-dire ne tournent pas. En effet, les sorties de vidange ne sont pas destinées à permettre un épandage à l'aide des disques.

Selon un mode de réalisation de l'invention, le chemin de guidage est positionnable au-dessus et à distance du sol, et les moyens d'entraînement de l'ensemble le long du chemin de guidage sont des moyens d'entraînement à l'état suspendu dudit ensemble le long dudit chemin de guidage, ces moyens d'entraînement comprenant un organe moteur du genre chariot, et une unité de contrôle et de commande de l'organe moteur.

Le déplacement à l'état suspendu de l'ensemble permet un franchissement aisé d'obstacles au sol.

Selon un mode de réalisation de l'invention, l'installation comprend une réserve de matériaux de litière installée à poste fixe à distance de la trémie, des moyens, tels qu'une vis sans fin, de transfert des matériaux de litière entre la réserve et la trémie, et une unité de contrôle et de commande des moyens de transfert au moins partiellement commune à l'unité de contrôle et de commande de l'organe moteur des moyens d'entraînement dudit ensemble.

Ainsi, le rechargement de la trémie en matériaux de litière peut s'opérer entre deux déplacements de la trémie le long de son chemin de guidage.

Selon un mode de réalisation de l'invention, le bâti support comprend une traverse dite horizontale portant les disques d'épandage et un montant de couplage de la traverse à la trémie.

Selon un mode de réalisation de l'invention, pour un montage des disques d'épandage sur le bâti support de manière réglable en position au moins dans le sens d'une variation de la distance entre les centres de disques, chaque disque d'épandage est monté déplaçable axialement le long de l'axe longitudinal de la traverse ou est couplé à la traverse par un bras pivotant autour d'un axe parallèle à l'axe de rotation du disque d'épandage et orthogonal à l'axe longitudinal de la traverse.

Selon un mode de réalisation de l'invention, les disques d'épandage sont, par l'intermédiaire du bâti support, montés à écartement variable du fond de la trémie, et sont aptes à passer, par l'intermédiaire du bâti support, d'une position écartée du fond de la trémie à une position rapprochée du fond de la trémie ou inversement.

Ce réglage permet d'obtenir une meilleure répartition au sol des matériaux de litière et d'aider, si nécessaire, au franchissement d'obstacles disposés sur le sol.

Selon un mode de réalisation de l'invention, pour un montage à écartement variable des disques d'épandage du fond de la trémie, le montant du bâti support est de longueur réglable.

Selon un mode de réalisation de l'invention, deux des parois latérales de la trémie s'étendent en regard et sont aptes à former l'une, la paroi avant ou menante, l'autre, la paroi arrière ou menée, de la trémie à l'état entrainé dudit ensemble le long du chemin de guidage, et les disques d'épandage sont montés réglables en position suivant la direction avant/arrière pris par rapport au sens de déplacement de la trémie dans le sens d'un rapprochement ou d'un écartement de l'une des parois avant ou arrière de ladite trémie.

Selon un mode de réalisation de l'invention, pour un montage des disques d'épandage sur le bâti support de manière réglable en position suivant la direction avant/arrière, pris par rapport au sens de déplacement de la trémie, dans le sens d'un rapprochement ou d'un écartement de l'une des parois avant ou arrière de ladite trémie, le montant du bâti support affecte la forme d'un L et la traverse du bâti support, qui s'étend transversalement à la branche horizontale du L, est montée à coulissement le long de ladite branche horizontale du L dans le sens d'un rapprochement ou d'un écartement de la branche verticale du L.

Selon un mode de réalisation de l'invention, les moyens d'entraînement en rotation des disques d'épandage comprennent deux moteurs couplés chacun à un disque d'épandage.

Il en résulte une facilité de réglage de la position relative des disques.

Selon un mode de réalisation de l'invention, la partie de fond de la trémie affecte la forme générale de deux entonnoirs disposés côte à côte, les débouchés desdits entonnoirs formant respectivement les orifices de déchargement de la trémie.

Grâce à cette disposition, on peut s'affranchir d'un dispositif de convoyage interne à la trémie tout en évitant l'accumulation de matière à l'intérieur de la trémie.

Selon un mode de réalisation de l'invention, l'installation comprend, pour au moins l'un des disques d'épandage, un déflecteur comprenant une muraille circulaire entourant la face équipée d'au moins une pale du disque , disque et muraille étant coaxiaux, ladite muraille étant une muraille discontinue pour ménager au moins une ouverture formant une sortie à travers laquelle les matériaux de litière, aptes à être entrainés en déplacement par la pale du disque , sont aptes à être évacués de l'enceinte délimitée par la muraille .

Grâce à cette disposition, il est possible d'optimiser la distribution des matériaux de litière en les déposant uniquement aux endroits opportuns. Il en résulte une réduction de la quantité de matériaux de litière utilisée.

Selon un mode de réalisation de l'invention, la muraille est stationnaire à l'état entraîné en rotation du disque d'épandage associé.

Selon un mode de réalisation de l'invention, la muraille est de longueur ajustable pour régler à volonté la dimension de la au moins une ouverture ménagée dans la muraille.

Selon un mode de réalisation de l'invention, le déflecteur comprend en outre un support sur lequel la muraille repose de manière amovible, ce support affectant la forme d'une platine s'étendant parallèlement et en regard de la face du disque d'épandage dépourvue de pale, les moyens d'entrainement en rotation du disque traversant ladite platine pour venir en prise avec le disque

Selon un mode de réalisation de l'invention, la muraille est couplée à la platine support par un couplage mâle/femelle.

Selon un mode de réalisation de l'invention, le déflecteur est monté de manière amovible sur l'installation.

L'invention a encore pour objet un procédé d'épandage, suivant la revendication 16, à l'aide d'une installation d'épandage du type précité dont la trémie comprend, en sus des orifices de déchargement, deux sorties obturables de vidange de la trémie, disposées sur la trémie à un niveau supérieur à celui occupé par les orifices de déchargement à l'état posé de la trémie reposant par son fond au sol, caractérisé en ce que ledit procédé comprend :
- une étape d'entraînement en déplacement de l'ensemble à l'état entrainé en rotation des disques d'épandage et ouvert des orifices de déchargement et
- une étape d'entraînement en déplacement de l'ensemble à l'état arrêté en rotation des disques d'épandage et ouvert d'au moins l'une des sorties de vidange.

Il en résulte ainsi la possibilité de parfaire dans un second temps le travail d'épandage effectué en un premier temps.

### BREVE DESCRIPTION DES DESSINS

L'invention sera bien comprise à la lecture de la description suivante d'exemples de réalisation, en référence aux dessins annexés dans lesquels :

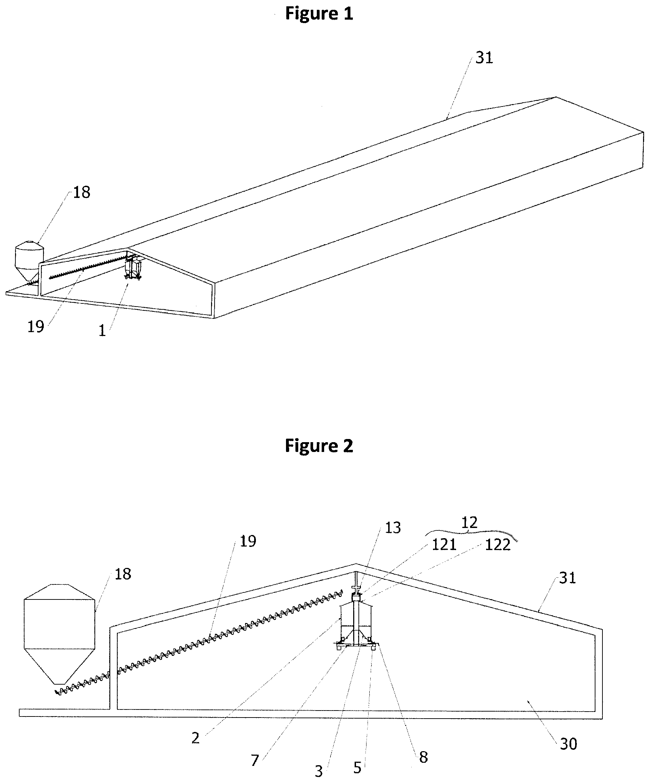

La figure 1 représente une vue d'ensemble d'une installation d'épandage conforme à l'invention à l'état monté dans un bâtiment d'élevage ;
La figure 2 représente une vue, prise depuis une extrémité du bâtiment, de l'installation de la figure 1 ;
La figure 3 représente une vue schématique partielle en perspective d'une installation conforme à l'invention ;
La figure 4 représente une vue schématique partielle en perspective d'une installation conforme à l'invention, les parois de la trémie étant réalisées transparentes pour pouvoir visualiser l'intérieur de la trémie ;
La figure 5 représente une vue schématique partielle en perspective d'une installation conforme à l'invention dans laquelle les disques sont couplés au bâti support par des bras pivotants ;
La figure 6 représente une vue schématique partielle en perspective d'une installation conforme à l'invention ;
La figure 7 représente une vue schématique partielle arrière de l'installation de la figure 6 prise sous un autre angle ;
La figure 8 représente une vue schématique partielle de côté d'une installation conforme à l'invention.

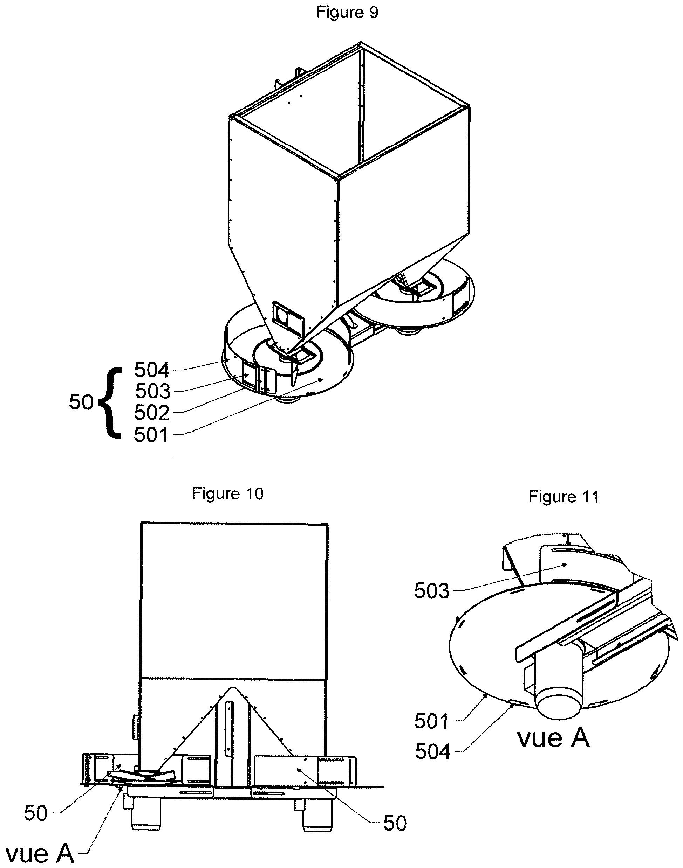

La figure 9 représente une vue schématique partielle en perspective d'une installation conforme à l'invention équipée de déflecteurs.
La figure 10 représente une vue schématique partielle en coupe de l'installation de la figure 9.
La figure 11 représente une vue du détail A de la figure 10.

### DESCRIPTION DETAILLEE

Comme mentionné ci-dessus, l'installation 1 d'épandage, objet de l'invention, est une installation au moins partiellement autonome, apte à permettre notamment l'épandage de matériaux de litière, tels que pailles, sciures, copeaux de bois et autres sur une aire 30 d'élevage formée ici dans un bâtiment 31 d'élevage, l'aire d'élevage correspondant aux zones du sol du bâtiment disposées de part et d'autre d'une allée à l'intérieur de laquelle l'installation est apte à circuler.

Cette installation comprend une trémie 2 apte à recevoir un approvisionnement de matériaux de litière en vrac. Cette trémie 2 comprend un fond 3 équipé de deux orifices 5 de déchargement obturables et des parois 4 latérales. Le dessus de la trémie 2 est ouvert pour permettre un rechargement par le dessus de ladite trémie 2. Dans l'exemple représenté, la partie de fond 3 de la trémie 2 affecte la forme générale de deux entonnoirs disposés côte à côte, les débouchés desdits entonnoirs formant respectivement les orifices 5 de déchargement de la trémie 2. Cette forme d'entonnoir tronc-pyramidal permet un écoulement gravitaire en direction du débouché de l'entonnoir sans nécessiter la présence d'un dispositif de convoyage supplémentaire. Chaque orifice 5 de déchargement de la trémie est obturable à l'aide d'une trappe 6 coulissante à la manière d'une trappe guillotine. Cette trappe 6 est à positionnement ajustable pour permettre un réglage de l'ouverture de l'orifice 5 de déchargement associé et par suite un réglage du débit de matériaux de litière s'écoulant hors de la trémie à travers ledit orifice 5 de déchargement. Dans l'exemple représente, cette trappe 6 est à actionnement manuel. Elle aurait pu de manière équivalente, être à actionnement automatique.

La trémie 2 comprend, en sus des orifices 5 de déchargement, deux sorties 14 obturables de vidange de la trémie 2. Ces deux sorties 14 obturables sont disposées sur la trémie à un niveau supérieur à celui occupé par les orifices 5 de déchargement à l'état posé de la trémie reposant par son fond au sol. Dans l'exemple représenté, chaque sortie 14 est disposée sur l'une des parois inclinées participant à la réalisation d'un entonnoir tronc-pyramidal de la trémie 2. Chaque entonnoir comporte donc un orifice 5 de déchargement dit axial et une sortie 14 de vidange dite latérale. De manière similaire à l'orifice 5 de déchargement, la sortie 14 de vidange est obturable à l'aide d'une trappe 15 coulissante à la manière d'une trappe guillotine. Cette trappe 15 est à positionnement ajustable pour permettre un réglage de l'ouverture de la sortie 14 de déchargement associée et par suite un réglage du débit de matériaux de litière s'écoulant hors de la trémie à travers ladite sortie 14 de déchargement Dans l'exemple représente, cette trappe 15 est à actionnement manuel. Elle aurait pu de manière équivalente, être à actionnement automatique.

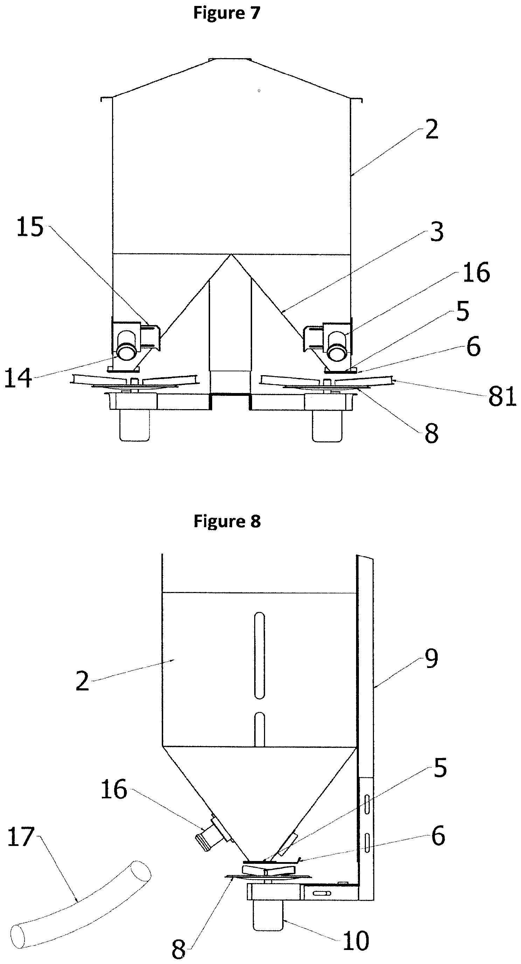

L'installation 1 comprend encore un conduit ou deux conduits 17. Dans l'exemple représenté, il est prévu un seul conduit 17 raccordable indifféremment à l'une ou l'autre des sorties 14 de vidange. Pour faciliter le raccordement de ce conduit 17 représenté de manière schématique à la figure 8, chaque sortie 14 de vidange est équipée d'un départ 16 de conduit sur lequel le conduit 17 peut s'emmancher. Chaque départ 16 de conduit s'étend donc à l'extérieur de la trémie 2, en saillie de cette dernière. Le rôle du conduit 17 raccordable à chaque sortie 14 de vidange sera décrit ci-après.

L'installation 1 d'épandage comprend encore un dispositif 7 de distribution des matériaux de litière issus de la trémie 2. Ce dispositif 7 de distribution comprend deux disques 8 d'épandage montés sur un bâti 9 support et des moyens 10 d'entraînement en rotation des disques 8 d'épandage de manière contrarotative. Les moyens 10 d'entraînement en rotation des disques 8 d'épandage comprennent deux moteurs couplés chacun à un disque 8 d'épandage. Chaque disque 8 est donc entrainé en rotation par son propre moteur et forme ainsi un ensemble autonome plus aisément déplaçable. Généralement, les disques 8 d'épandage tournent à la même vitesse même si un tel montage permet un entraînement en rotation des disques indépendamment l'un de l'autre.

Chaque disque 8 d'épandage est équipé d'au moins une pale 81 d'éjection radiale qui peut être réglable en position sur le disque de manière en soi connue. Chaque disque 8 d'épandage s'étend, en configuration d'utilisation de l'installation 1 à l'extérieur de la trémie, au-dessous de l'un des orifices 5 de déchargement de la trémie 2 avec son axe de rotation s'étendant verticalement, c'est-à-dire généralement à plus ou moins 15 ° près. Les disques 8 d'épandage s'étendent donc dans un plan sensiblement horizontal. Chaque disque 8 d'épandage est apte à recevoir de l'orifice 5 de déchargement auquel il est associé et à l'aplomb duquel il se trouve des matériaux de litière à un débit fonction du degré d'ouverture dudit orifice 5 de déchargement. La rotation des disques 8 d'épandage entraine la projection au sol des matériaux de litière. Les disques 8 d'épandage sont, pour leur maintien en position par rapport à la trémie, montés sur un bâti 9 support qui est couplé à la trémie 2 et forme avec cette dernière un ensemble 11 solidaire en déplacement.

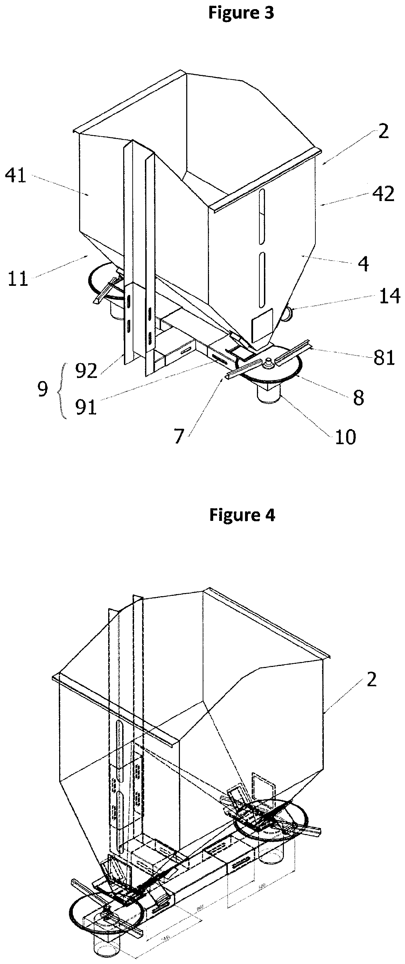

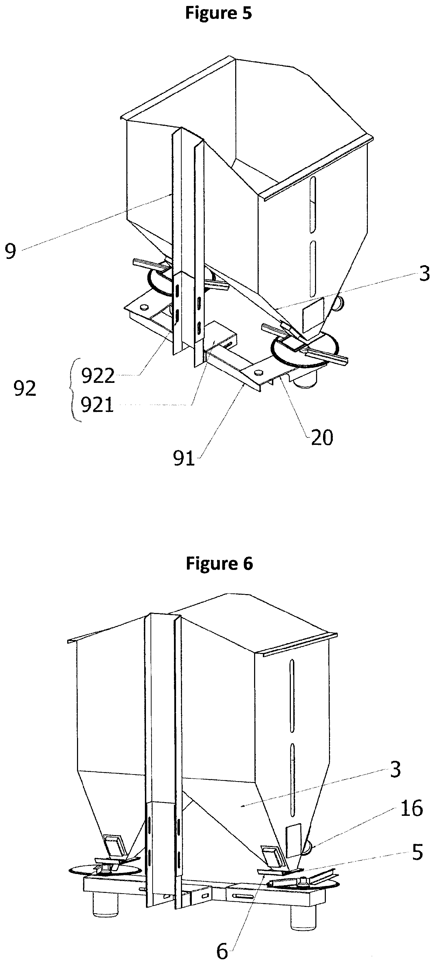

Dans l'exemple représenté, le bâti 9 support comprend une traverse 91, dite horizontale, portant les disques 8 d'épandage, et un montant 92 de couplage de la traverse 91 à la trémie 2, le montant 92 et la traverse 91 étant orthogonaux entre eux. Dans l'exemple représenté, le montant 92 du bâti 9 support affecte la forme d'un L et la traverse 91 du bâti 9 support, qui s'étend transversalement à la branche horizontale du L, est montée à coulissement le long de ladite branche 921 horizontale du L dans le sens d'un rapprochement ou d'un écartement de la branche 922 verticale du L. Dans l'exemple représenté à la figure 3, la traverse 91 est de longueur ajustable et est formée de deux tronçons d'extrémité et d'un tronçon intermédiaire disposé entre les tronçons d'extrémité. Chaque tronçon d'extrémité porte un disque 8 d'épandage. Les tronçons d'extrémité sont montés à coulissement sur le tronçon intermédiaire dans le sens d'un rapprochement ou d'un écartement l'un de l'autre. Il en résulte la possibilité d'un réglage en position des disques 8 d'épandage dans le sens d'une variation de la distance entre les centres de disques, en vue d'un rapprochement ou d'un écartement des disques 8 d'épandage entre eux pour faire varier la largeur de travail. Ce même réglage des disques 8 d'épandage, dans le sens d'un rapprochement ou d'un écartement l'un de l'autre, peut être obtenu non pas par déplacement axial des disques le long de l'axe longitudinal de la traverse 91 mais à l'aide de bras 20 pivotant autour d'un axe parallèle à l'axe de rotation du disque 8 d'épandage et orthogonal à l'axe longitudinal de la traverse 91 comme illustré à la figure 5.

Pour permettre une plus grande variation de la position des disques, le montant 92 du bâti support est un montant télescopique de longueur réglable ou ajustable autorisant ainsi un montage à écartement variable des disques 8 d'épandage du fond 3 de la trémie 2.

Pour parfaire la distribution et assurer une distribution des matériaux de litière en des emplacements précis, l'installation comprend, pour au moins l'un des disques 8 d'épandage, dans l'exemple représenté, pour chaque disque 8 d'épandage, un déflecteur 50. Ce déflecteur 50 comprend une muraille 502, 503, 504 circulaire entourant la face équipée d'au moins une pale 81 du disque 8 associé audit déflecteur 50.de sorte que la muraille et le disque sont coaxiaux.

Cette muraille est discontinue. La ou les discontinuités de la muraille forment une ou des ouvertures dans la muraille. Dans les exemples représentés, la muraille comporte une seule ouverture. Cette ouverture ménagée dans la muraille 502, 503, 504 par une interruption de la muraille forme une sortie à travers laquelle les matériaux de litière, aptes à être entrainés en déplacement par la pale 81 du disque 8, sont aptes à être évacués de l'enceinte délimitée par la muraille 502, 503, 504. Bien évidemment, cette muraille est stationnaire à l'état entraîné en rotation du disque 8 d'épandage associé. Cette muraille délimite donc un secteur cylindrique apte à être balayé par la au moins une pale 81 du disque 8 à l'état entrainé en rotation du disque 8. Dans l'exemple représenté, la pale fait saillie du bord périphérique externe du disque 8. L'extrémité libre de la pale 81 du disque 8 suit une trajectoire circulaire le long d'une ligne parallèle à la muraille à l'intérieur du secteur cylindrique délimité par la muraille. Dans ce secteur cylindrique délimité par la muraille, l'extrémité libre de la pale 81 est écartée de la partie en regard de la muraille d'une distance au plus égale à 1 cm, généralement comprise entre 1 et 5 mm. Cette distance correspond au jeu nécessaire au bon fonctionnement de l'ensemble.

Dans les exemples représentés, le déflecteur 50 comprend en outre un support 501 sur lequel la muraille repose. Ce support 501 affecte la forme d'une platine s'étendant parallèlement et en regard de la face du disque 8 d'épandage dépourvue de pale 81 d'éjection. En configuration d'utilisation de l'installation, la platine réalisée ici circulaire s'étend donc au-dessous du disque 8 d'épandage. Les moyens 10 d'entrainement en rotation du disque 8 d'épandage traversent ladite platine pour venir en prise avec le disque 8 d'épandage. Les disques 8 d'épandage et les déflecteurs 50 associés sont montés sur le bâti 9 support réglables en position au moins dans le sens d'une variation de la distance entre les centres de disques 8. Ainsi, la platine d'un déflecteur 50 est montée sur le bâti 9 support de sorte que le déflecteur 50 et le disque 8 d'épandage associé forment un ensemble solidaire en déplacement dans le sens d'un rapprochement ou d'un écartement du centre du disque du centre de l'autre disque. Le déflecteur 50 est donc porté par la même pièce de liaison que celle qui relie le disque 8 associé au bâti 9 support.

Dans les exemples représentés, la muraille est couplée à la platine 501 support par un couplage mâle/femelle. A cet effet, la base de la muraille est munie de crochets aptes à s'insérer dans des fentes ménagées sur la platine 501 support. Les crochets délimitent un logement dit conique en V. Un bord de la fente qui coopère avec un crochet est apte à être prise en sandwich entre les branches du V à l'état inséré du crochet dans la fente pour permettre un verrouillage par coincement. Les fentes de la platine 501 support sont réparties circonférentiellement sur ladite platine de sorte que la muraille peut être positionnée en un emplacement quelconque de la circonférence, ce positionnement s'opérant de manière aisée par simple venue en prise des crochets avec les fentes. De même un démontage de la muraille s'opère aisément.

Dans les exemples représentés, cette muraille est formée par des bandes de tôles si nécessaires cintrées.

Dans les exemples représentés, la muraille est de longueur ajustable pour régler à volonté la dimension de la au moins une ouverture ménagée dans la muraille. Cette muraille est donc constituée de plusieurs éléments de paroi dont au moins l'un est monté à coulissement par rapport au reste de la muraille. Cet élément de paroi, dit mobile, de la muraille, représenté en 503 aux figures, peut être muni d'au moins une de préférence d'au moins deux lumières longitudinales comme représenté à l'intérieur desquelles au moins un boulon de liaison à au moins un élément de paroi dit fixe de la muraille est apte à s'insérer. Il en résulte une simplicité du réglage par simple déplacement à coulissement du ou des éléments mobiles de la muraille le long de l'élément fixe de la muraille. Dans l'exemple représenté, la muraille est formée d'un premier élément de paroi dit fixe représenté en 504 aux figures et formant un demi-cercle. Cet élément de paroi est dit fixe car il est couplable au support 501 par l'intermédiaire de crochets comme décrits ci-dessus. La muraille comprend deux éléments de paroi mobiles représentés en 503 formant chacun un quart de cercle. Chaque élément de paroi mobile 503 est couplable de manière ajustable à l'élément de paroi fixe 504 via des boulons comme décrit ci-dessus. Chaque élément de paroi 503 est dit mobile car il ne comporte pas de liaison directe au support 501. La muraille comprend également deux éléments de paroi fixes, dits de finition, représentés en 502 aux figures. Chaque élément de paroi fixe de finition est équipé d'au moins un crochet de liaison au support 501 et est couplable via au moins un boulon à l'élément de paroi mobile 503. Ainsi, chaque élément de paroi mobile 503 s'étend entre deux éléments de paroi fixes 502 et 504 auquel il est couplé par l'intermédiaire de boulons. La muraille est donc formée depuis une extrémité en direction de l'autre extrémité, d'un élément de paroi fixe de finition 502, un élément de paroi mobile 503, de l'élément de paroi fixe en demi-cercle 504, d'un élément de paroi mobile 503 et d'un élément de paroi fixe de finition 502. Il en résulte un ajustement aisé en longueur de la muraille.

Généralement, le déflecteur 50 est monté de manière amovible sur l'installation.

Enfin, l'installation 1 comprend des moyens 12 d'entraînement en déplacement de l'ensemble bâti support/ trémie le long d'un chemin 13 de guidage prédéterminé et les disques 8 d'épandage sont montés sur le bâti 9 support réglables en position suivant la direction avant/arrière pris par rapport au sens de déplacement de la trémie dans le sens d'un rapprochement ou d'un écartement de l'une des parois avant 41 ou arrière 42 de ladite trémie, cette variation de position étant obtenue grâce à la possibilité de déplacement de la traverse 91 le long de la branche horizontale du profilé en L constitutif du montant 92. Tous ces réglages permettent de projeter au mieux les matériaux de litière.

Les moyens 12 d'entraînement de l'ensemble trémie/bâti support le long du chemin 13 de guidage sont des moyens d'entraînement à l'état suspendu dudit ensemble le long dudit chemin 13 de guidage. Ce chemin 13 de guidage est en effet un rail positionnable au-dessus et à distance du sol. Dans l'exemple représenté, ce rail est fixé au plafond du bâtiment d'élevage et à l'aplomb de l'allée qui sépare les deux zones de réception de matériaux de litière. Les moyens 12 d'entraînement de l'ensemble le long dudit rail comprennent un chariot 121 motorisé dont les roues roulent sur ledit rail, et une unité 122 de contrôle et de commande du chariot 121 motorisé. Cette unité 122 de contrôle et de commande est de manière en soi connue un automate programmable ou un micro-ordinateur dont les données d'entrées peuvent être fournies à l'aide d'une interface homme machine et/ou de capteurs et/ou de données mémorisées. L'ensemble est donc déplaçable en va et vient en parcourant à chaque déplacement aller ou retour le bâtiment dans le sens de sa longueur ;

Pour permettre le rechargement, généralement par le dessus, de la trémie 2 en matériaux de litière, l'installation 1 comprend une réserve 18 de matériaux de litière, à savoir ici un silo, installée à poste fixe à distance de la trémie, en l'occurrence ici à l'extérieur du bâtiment d'élevage et une vis 19 sans fin de transfert des matériaux de litière entre la réserve 18 et la trémie 2. Cette vis sans fin est pilotée à l'aide d'une unité de contrôle et de commande représentée ici commune à l'unité 122 de contrôle et de commande du chariot motorisé pour permettre un fonctionnement synchronisé de la vis 19 sans fin de transfert et des roues du chariot motorisé.

En effet, le fonctionnement de l'installation est tel que suit : on suppose que l'ensemble trémie/bâti support est disposé à une extrémité du rail de guidage à l'aplomb de la vis 19 de transfert. L'opérateur a entré au niveau de l'interface homme /machine le nombre d'allers/retours de l'ensemble et a ouvert au niveau souhaité les orifices 5 de déchargement en agissant manuellement sur les trappes d'obturation de ces orifices 5 de déchargement. De même, il a réglé le positionnement des disques par rapport aux orifices 5 de déchargement en agissant sur la longueur du montant, la position de la traverse et la position relative des disques entre eux. Dans le mode de réalisation où des déflecteurs sont présents, l'opérateur a également réglé la position et la dimension de la ou des ouvertures ménagées dans la muraille. Il commande alors la distribution de matériaux de litière par actionnement d'un bouton de commande. Le lancement de la distribution entraine dans un premier temps le remplissage de la trémie à l'aide de la vis sans fin si elle n'était pas déjà pleine, puis le déplacement de la trémie en va-et-vient en parallèle de la rotation des disques 8 d'épandage, cette rotation des disques 8 d'épandage étant commandée à partir d'une unité de contrôle et de commande au moins partiellement commune à l'unité de contrôle et de commande dudit ensemble. Selon la capacité de la trémie et la volonté de l'opérateur, la distribution du contenu de la trémie peut s'effectuer sur un aller, ou sur un aller et un retour, ou sur plusieurs allers et retours. Une fois vide, la trémie est rechargée à l'aide de la vis de transfert comme mentionné ci-dessus.

Une fois la distribution de matériaux de litière, à l'aide des orifices 5 de déchargement et des disques 8 d'épandage, achevée, il peut être procédé à un rajout local de matériaux de litière. Pour se faire, l'opérateur procède à la fermeture des orifices 5 de déchargement, à l'arrêt en rotation des disques 8 d'épandage, à l'ouverture d'une des sorties 14 de vidange et au raccordement d'un conduit 17 à ladite sortie 14 de vidange si l'opérateur est tout seul. Si deux opérateurs sont présents, il peut être utilisé les deux sorties 14 de vidange simultanément et donc deux conduits. Toutes ces opérations peuvent se faire en temps masqué pendant une étape de remplissage de la trémie. Dès que la trémie est remplie, un nouveau déplacement en va-et-vient peut être lancé au cours duquel l'opérateur rajoute localement à l'aide du conduit 17 des matériaux de litière sur le lit déjà formé. L'opérateur avance donc au rythme de la trémie. Lorsqu'une moitié de bâtiment est achevée, il procède de manière similaire avec l'autre moitié du bâtiment après avoir fermé la sortie 14 de vidange, débranché le conduit 17, rebranché le conduit 17 sur l'autre sortie 14 de vidange et ouvert l'autre sortie 14 de vidange. Dans cette configuration d'utilisation, à l'état ouvert d'au moins l'une des sorties de vidange, les disques d'épandage sont à l'arrêt, c'est-à-dire ne tournent pas.

Le procédé d'épandage tel que décrit ci-dessus comprend donc :
- une étape d'entraînement en déplacement de l'ensemble à l'état entrainé en rotation des disques d'épandage et ouvert des orifices de déchargement et
- une étape d'entraînement en déplacement de l'ensemble à l'état arrêté en rotation des disques d'épandage et ouvert d'au moins l'une des sorties de vidange.

Ce procédé d'épandage permet de gérer des largeurs de travail allant de quelques mètres à plusieurs dizaines de mètres, une longueur de travail pouvant dépasser la centaine de mètres avec une répartition parfaite des matériaux de litière.

## Revendications

1. Installation (1) d'épandage de matériaux de litière sur une aire (30) d'élevage, ladite installation comprenant :
- une trémie (2) apte à recevoir un approvisionnement de matériaux de litière en vrac, ladite trémie (2) comprenant un fond (3) équipé de deux orifices (5) de déchargement obturables et des parois (4) latérales,
- un dispositif (7) de distribution comprenant deux disques (8) d'épandage montés sur un bâti (9) support et des moyens (10) d'entraînement en rotation des disques (8) d'épandage, chaque disque (8) d'épandage, équipé d'au moins une pale (81) d'éjection radiale, s'étendant, en configuration d'utilisation de l'installation, au-dessous de l'un des orifices (5) de déchargement de la trémie (2) avec son axe de rotation vertical pour recevoir les matériaux de litière tombant par gravité de l'orifice (5) de déchargement associé et les projeter au sol, le bâti (9) support des disques (8) d'épandage étant couplé à la trémie (2) pour former un ensemble (11) solidaire en déplacement, et,
- des moyens (12) d'entraînement en déplacement de l'ensemble (11),
**caractérisée en ce que** les moyens (12) d'entraînement en déplacement de l'ensemble (11) sont des moyens d'entraînement en déplacement dudit ensemble le long d'un chemin de guidage prédéterminé et **en ce que** les disques (8) d'épandage sont montés sur le bâti (9) support réglables en position au moins dans le sens d'une variation de la distance entre les centres de disques (8) et **en ce que** la trémie (2) comprend, en sus des orifices (5) de déchargement, deux sorties (14) obturables de vidange de la trémie (2), disposées sur la trémie (2), à un niveau supérieur à celui occupé par les orifices (5) de déchargement, à l'état posé de la trémie (2) reposant par son fond (3) au sol.

2. Installation (1) d'épandage selon la revendication précédente, **caractérisée en ce que** l'installation (1) comprend au moins un conduit (17) raccordable à au moins l'une des sorties (14), de préférence, à chacune des sorties (14) de vidange.

3. Installation (1) d'épandage selon l'une des revendications 1 ou 2, **caractérisée en ce que**, en configuration d'utilisation, à l'état ouvert d'au moins l'une des sorties (14) de vidange, les disques (8) d'épandage sont à l'arrêt.

4. Installation (1) d'épandage selon l'une des revendications précédentes, **caractérisée en ce que** le chemin (13) de guidage est positionnable au-dessus et à distance du sol, et **en ce que** les moyens (12) d'entraînement de l'ensemble (11) le long du chemin (13) de guidage sont des moyens d'entraînement à l'état suspendu dudit ensemble (11) le long dudit chemin (13) de guidage, ces moyens (12) d'entraînement comprenant un organe (121) moteur du genre chariot, et une unité (122) de contrôle et de commande de l'organe (121) moteur.

5. Installation (1) d'épandage selon la revendication précédente, **caractérisée en ce que** l'installation (1) comprend une réserve (18) de matériaux de litière installée à poste fixe à distance de la trémie (2), des moyens (19), tels qu'une vis sans fin, de transfert des matériaux de litière entre la réserve (18) et la trémie (2), et une unité de contrôle et de commande des moyens (19) de transfert au moins partiellement commune à l'unité (122) de contrôle et de commande de l'organe (121) moteur des moyens (12) d'entraînement dudit ensemble (11).

6. Installation (1) d'épandage selon l'une des revendications précédentes, **caractérisée en ce que** le bâti (9) support comprend une traverse (91) dite horizontale portant les disques (8) d'épandage et un montant (92) de couplage de la traverse (91) à la trémie (2).

7. Installation (1) d'épandage selon la revendication précédente, **caractérisée en ce que**, pour un montage des disques (8) d'épandage sur le bâti (9) support de manière réglable en position au moins dans le sens d'une variation de la distance entre les centres de disques (8), chaque disque (8) d'épandage est monté déplaçable axialement le long de l'axe longitudinal de la traverse (91) ou est couplé à la traverse (91) par un bras (20) pivotant autour d'un axe parallèle à l'axe de rotation du disque (8) d'épandage et orthogonal à l'axe longitudinal de la traverse (91).

8. Installation (1) d'épandage selon l'une des revendications précédentes, **caractérisée en ce que** les disques (8) d'épandage sont, par l'intermédiaire du bâti (9) support, montés à écartement variable du fond (3) de la trémie (2), et sont aptes à passer, par l'intermédiaire du bâti support (9), d'une position écartée du fond (3) de la trémie (2) à une position rapprochée du fond (3) de la trémie (2), ou inversement.

9. Installation (1) d'épandage selon la revendication précédente, prise en combinaison avec l'une des revendications 6 ou 7, **caractérisée en ce que**, pour un montage à écartement variable des disques (8) d'épandage du fond (3) de la trémie (2), le montant (92) du bâti (9) support est de longueur réglable.

10. Installation (1) d'épandage selon l'une des revendications précédentes, **caractérisée en ce que** deux des parois (4) latérales de la trémie s'étendent en regard et sont aptes à former l'une, la paroi (41) avant ou menante, l'autre, la paroi (42) arrière ou menée, de la trémie (2) à l'état entrainé dudit ensemble (11) le long du chemin (13) de guidage, et **en ce que** les disques (8) d'épandage sont montés réglables en position suivant la direction avant/arrière pris par rapport au sens de déplacement de la trémie (2) dans le sens d'un rapprochement ou d'un écartement de l'une des parois avant (41) ou arrière (42) de ladite trémie (2).

11. Installation (1) d'épandage selon la revendication précédente, prise en combinaison avec l'une des revendications 6 ou 7, **caractérisée en ce que**, pour un montage des disques (8) d'épandage sur le bâti support (9) de manière réglable en position suivant la direction avant/arrière, pris par rapport au sens de déplacement de la trémie (2), dans le sens d'un rapprochement ou d'un écartement de l'une des parois avant (41) ou arrière (42) de ladite trémie (2), le montant (92) du bâti support (9) affecte la forme d'un L et la traverse (91) du bâti support (9), qui s'étend transversalement à la branche (921) horizontale du L, est montée à coulissement le long de ladite branche (921) horizontale du L dans le sens d'un rapprochement ou d'un écartement de la branche (922) verticale du L.

12. Installation (1) d'épandage selon l'une des revendications précédentes, **caractérisée en ce que** les moyens (10) d'entraînement en rotation des disques (8) d'épandage comprennent deux moteurs couplés chacun à un disque (8) d'épandage.

13. Installation (1) d'épandage selon l'une des revendications précédentes, **caractérisée en ce que** la partie de fond (3) de la trémie (2) affecte la forme générale de deux entonnoirs disposés côte à côte, les débouchés desdits entonnoirs formant respectivement les orifices (5) de déchargement de la trémie (2).

14. Installation (1) d'épandage selon l'une des revendications 1 à 10, **caractérisée en ce qu'**elle comprend, pour au moins l'un des disques (8) d'épandage, un déflecteur (50) comprenant une muraille (502, 503, 504) circulaire entourant la face équipée d'au moins une pale (81) du disque (8), disque (8) et muraille (502, 503, 504) étant coaxiaux, ladite muraille (502, 503, 504) étant une muraille discontinue pour ménager au moins une ouverture formant une sortie à travers laquelle les matériaux de litière, aptes à être entrainés en déplacement par la pale (81) du disque (8), sont aptes à être évacués de l'enceinte délimitée par la muraille (502, 503, 504).

15. Installation (1) d'épandage selon la revendication 14,
**caractérisée en ce que** la muraille (502, 503, 504) est stationnaire à l'état entraîné en rotation du disque (8) d'épandage associé.

16. Procédé d'épandage à l'aide d'une installation d'épandage conforme à l'une des revendications 1 à 15,
**caractérisé en ce que** ledit procédé comprend :
- une étape d'entraînement en déplacement de l'ensemble (11) à l'état entraîné en rotation des disques (8) d'épandage et ouvert des orifices (5) de déchargement et
- une étape d'entraînement en déplacement de l'ensemble (11) à l'état arrêté en rotation des disques (8) d'épandage et ouvert d'au moins l'une des sorties (14) de vidange.

## Patentansprüche

1. Einrichtung (1) zur Verteilung von Einstreumaterialien in einem Aufzuchtgebiet (30), wobei die Einrichtung umfasst:
- einen Trichter (2), der zur Aufnahme einer losen Einstreumaterialzufuhr geeignet ist, wobei der Tricher (2) einen Boden (3) umfasst, der mit zwei verschließbaren Austrittsöffnungen (5) und Seitenwänden (4) ausgestattet ist,
- eine Verteilvorrichtung (7), umfassend zwei Streuscheiben (8), die auf einem Traggestell (9) montiert sind, und Mittel (10) zum Rotieren der Streuscheiben (8), wobei jede Streuscheibe (8) mit mindestens einer radialen Wurfschaufel (81) ausgestattet ist, die sich mit ihrer vertikalen Rotationsachse im Nutzungszustand der Einrichtung unterhalb einer der Austrittsöffnungen (5) des Trichters (2) erstreckt, um das mittels Schwerkraft aus der jeweiligen Öffnung (5) fallende Einstreumaterial aufzunehmen und dieses auf den Boden zu werfen, wobei das Traggestell (9) der Streuscheiben (8) mit dem Trichter (2) gekoppelt ist, um eine bewegungsverbundene Baugruppe (11) zu bilden, und
- Mittel (12) zur Verschiebung der Baugruppe (11),
**dadurch gekennzeichnet, dass** die Verschiebungsmittel (12) der Baugruppe (11) Mittel zur Verschiebung der Baugruppe entlang einer vorgegebenen Gleitbahn sind, und dass die Streuscheiben (8) auf dem Traggestell (9) mindestens derart verstellbar montiert sind, dass der Abstand zwischen den Mittelpunkten der Scheiben (8) variiert werden kann, und dass der Trichter (2) oberhalb seiner Austrittsöffnungen (5) zwei verschließbare Öffnungen (14) zur Entleerung des Trichters (2) umfasst, die im aufgesetzten Zustand des Trichters, in dem dessen Unterteil (3) am Boden liegt, oberhalb der Ebene der Austrittsöffnungen (5) am Trichter angeordnet sind.

2. Einrichtung (1) nach dem vorstehenden Anspruch, **dadurch gekennzeichnet, dass** die Einrichtung (1) mindestens eine Leitung (17) umfasst, die an mindestens eine der Entleerungsöffnungen (14), vorzugsweise an jede der Entleerungsöffnungen (14), anschließbar ist.

3. Einrichtung (1) nach einem der Ansprüche 1 oder 2, **dadurch gekennzeichnet, dass** sich die Streuscheiben (8) im Stillstand befinden, wenn mindestens eine der Entleerungsöffnungen (14) im Nutzungszustand geöffnet ist.

4. Einrichtung (1) nach einem der vorstehenden Ansprüche, **dadurch gekennzeichnet, dass** die Gleitbahn (13) oberhalb und in einem Abstand zum Boden positionierbar ist, und dass die Mittel (12) zur Verschiebung der Baugruppe (11) entlang der Gleitbahn (13) Mittel zur Verschiebung der aufgehängten Baugruppe (11) entlang der Gleitbahn (13) sind, wobei diese Verschiebungsmittel (12) ein schlittenartiges Motorelement (121) und eine Steuerungseinheit (122) des Motorelements (121) umfassen.

5. Einrichtung (1) nach dem vorstehenden Anspruch, **dadurch gekennzeichnet, dass** die Einrichtung (1) umfasst: einen ortsfesten Reservebehälter (18) für Einstreumaterial, der in einem Abstand zum Trichter (2) angeordnet ist, Mittel (19), z.B. ein Schneckengetriebe, zur Überführung des Einstreumaterials zwischen Reservebehälter (18) und Trichter (2) und eine Steuerungseinheit der Überführungsmittel (19), die von der Steuerungseinheit (122) des Motorelements (121) der Verschiebungsmittel (12) der Baugruppe (11) mindestens teilweise gemeinsam genutzt wird.

6. Einrichtung (1) nach einem der vorstehenden Ansprüche, **dadurch gekennzeichnet, dass** das Traggestell (9) eine sog. horizontale Traverse (91), die die Streuscheiben (8) trägt, und eine Halterung (92) zur Kopplung der Traverse (91) mit dem Trichter (2) umfasst.

7. Einrichtung (1) nach dem vorstehenden Anspruch, **dadurch gekennzeichnet, dass** zur mindestens bezüglich des Abstands zwischen den Mittelpunkten der Scheiben (8) verstellbaren Montage der Streuscheiben (8) am Traggestell (9) jede Streuscheibe (8) entlang der Längsachse der Traverse (91) axial verschiebbar montiert ist oder durch einen um eine parallel zur Rotationsachse der Streuscheibe (8) und orthogonal zur Längsachse der Traverse (91) verlaufende Achse schwenkbaren Schwenkwarm (20) mit der Traverse (91) gekoppelt ist.

8. Einrichtung (1) nach einem der vorstehenden Ansprüche, **dadurch gekennzeichnet, dass** die Streuscheiben (8) durch das Traggestell (9) in einem variablen Abstand zum Unterteil (3) des Trichters (2) montiert sind und dazu geeignet sind, mittels des Traggestells (9) von einer vom Unterteil (3) des Trichters (2) beabstandeten Lage in eine an das Unterteil (3) des Trichters (2) herangezogene Lage, oder umgekehrt, überzugehen.

9. Einrichtung (1) nach dem vorstehenden Anspruch in Verbindung mit einem der Ansprüche 6 oder 7, **dadurch gekennzeichnet, dass** die Halterung (92) des Traggestells (9) eine verstellbare Länge aufweist, um die Streuscheiben (8) in einem variablen Abstand zum Unterteil (3) des Trichters (2) montieren zu können.

10. Einrichtung (1) nach einem der vorstehenden Ansprüche, **dadurch gekennzeichnet, dass** zwei der Seitenwände (4) des Trichters (2) sich einander gegenüber erstrecken und dazu geeignet sind, bei Verschiebung der Baugruppe (11) entlang der Gleitbahn (13) jeweils die Vorder-bzw. Antriebswand (41) bzw. die Rück-bzw. angetriebene Wand (42) des Trichters zu bilden, und dass die Streuscheiben (8) derart montiert sind, dass ihre Lage in Bezug auf die Verschiebungsrichtung des Trichters (2) vor-bzw. rückwärts verstellbar ist, um sie an eine der Vorder-(41) oder Rückwände (42) des Trichters (2) heranzuziehen oder sie davon zu entfernen.

11. Einrichtung (1) nach dem vorstehenden Anspruch in Verbindung mit einem der Ansprüche 6 oder 7, **dadurch gekennzeichnet, dass** die Halterung (92) des Traggestells (9) L-förmig ist und die sich quer zum horizontalen Zweig (921) des L erstreckende Traverse (91) des Traggestells (9) zur Annäherung oder Entfernung vom vertikalen Zweig (922) des L entlang dem horizontalen Zweig (921) des L gleitbar ist, um die Streuscheiben (8) bezogen auf die Verschiebungsrichtung des Trichters (2) in Vorwärts-/Rückwärtsrichtung verstellbar auf dem Traggestell (9) zu montieren, um sie an die Vorder- (41) oder Rückwand (42) des Trichters (2) heranzuziehen oder sie davon zu entfernen.

12. Einrichtung (1) nach einem der vorstehenden Ansprüche, **dadurch gekennzeichnet, dass** die Mittel (10) zur Rotation der Streuscheiben (8) zwei Motoren umfassen, die jeweils mit einer Streuscheibe (8) gekoppelt sind.

13. Einrichtung (1) nach einem der vorstehenden Ansprüche, **dadurch gekennzeichnet, dass** das Unterteil (3) des Trichters (2) allgemein in der Form von zwei nebeneinander angeordneten Trichtern vorliegt, wobei die Auslassöffnungen der Trichter jeweils Austrittsöffnungen (5) des Trichters (2) bilden.

14. Einrichtung (1) nach einem der Ansprüche 1 - 10, **dadurch gekennzeichnet, dass** sie für mindestens eine der Streuscheiben (8) umfasst: einen Abweiser (50) mit einer die Stirnfläche umgebenden kreisförmigen Wand (502, 503, 504), die mit mindestens einer Schaufel (81) ausgestattet ist, wobei Scheibe (8) und Wand (502, 503, 504) koaxial sind, wobei die Wand (502, 503, 504) eine diskontinuierliche Wand ist, um mindestens eine Öffnung aufzunehmen, die eine Austrittsöffnung bildet, durch die die Streumaterialien, die dazu geeignet sind, von der Schaufel (81) der Scheibe (8) verschoben zu werden, aus dem von der Wand (502, 503, 504) abgegrenzten Gehäuse geleert werden können.

15. Einrichtung (1) nach Anspruch 14,
**dadurch gekennzeichnet, dass** die Wand (502, 503, 504) bei Rotationen der ihr zugeordneten Streuscheibe (8) ortsfest ist.

16. Verfahren zum Streuen mithilfe einer Einstreueinrichtung nach einem der Ansprüche 1 -15,
**dadurch gekennzeichnet, dass** es umfasst:
- Verschieben der Baugruppe (11) bei rotierenden Streuscheiben (8) und geöffneten Austrittsöffnungen (5) und
- Verschieben der Baugruppe (11), wenn sich die Streuscheiben (8) im Rotationsstopp befinden und mindestens eine der und geöffneten Austrittsöffnungen (14) und mindestens eine der Entleerungsöffnungen (14) geöffnet ist.

## Claims

1. A facility (1) for spreading bedding materials over a farming area (30), said facility comprising:
- a hopper (2) able to receive a supply of bulk bedding materials, said hopper (2) comprising a bottom (3) equipped with two closable discharge openings (5) and side walls (4),
- a distribution device (7) comprising two spreading discs (8) mounted on a support frame (9) and means (10) for rotating the spreading discs (8), each spreading disc (8), equipped with at least one radial ejection blade (81), extending, in the usage configuration of the facility, below one of the discharge openings (5) of the hopper (2) with its vertical rotation axis to receive the bedding materials falling by gravity from the associated discharge opening (5) and to spray them on the ground, the support frame (9) of the spreading discs (8) being coupled to the hopper (2) to form an assembly (11) secured in movement, and
- means (12) for moving the assembly (11),
**characterized in that** the means (12) for moving the assembly (11) are means for moving said assembly along a predetermined guide path and **in that** the spreading discs (8) are mounted on the support frame (9) adjustable in position at least in the direction of a variation of the distance between the disc centers (8) and **in that** the hopper (2) comprises, above the discharge openings (5), two closable emptying outlets (14) of the hopper (2), arranged on the hopper (2), at a level higher than that occupied by the discharge openings (5), in the laid state of the hopper (2) resting by its bottom (3) on the ground.

2. The spreading facility (1) according to the preceding claim, **characterized in that** the facility (1) comprises at least one pipe (17) connectable to at least one of the outlets (14), preferably to each of the emptying outlets (14).

3. The spreading facility (1) according to one of claims 1 or 2, **characterized in that**, in the usage configuration, in the open state of at least one of the emptying outlets (14), the spreading discs (8) are stopped.

4. The spreading facility (1) according to one of the preceding claims, **characterized in that** the guide path (13) can be positioned above and away from the ground, and **in that** the means (12) for driving the assembly (11) along the guide path (13) are means for driving, in the suspended state, said assembly (11) along said guide path (13), said drive means (13) comprising a motor member (121) of the trolley type, and a control and command unit (122) of the motor member (121).

5. The spreading facility (1) according to the preceding claim, **characterized in that** the facility (1) comprises a reserve (18) of bedding materials installed at a fixed station at a distance from the hopper (2), means (19), such as a worm screw, for transferring bedding materials between the reserve (18) and the hopper (2), and a control and command unit for the transfer means (19) at least partially shared by the control and command unit (122) of the motor member (121) of the drive means (12) of said assembly (11).

6. The spreading facility (1) according to one of the preceding claims, **characterized in that** the support frame (9) comprises a so-called horizontal crosspiece (91) bearing the spreading discs (8) and an upright (92) for coupling the crosspiece (91) to the hopper (2).

7. The spreading facility (1) according to the preceding claim, **characterized in that**, for mounting of the spreading discs (8) on the support frame (9) in a position-adjustable manner at least in the direction varying the distance between the disc centers (8), each spreading disc (8) is mounted movable axially along the longitudinal axis of the crosspiece (91) or is coupled to the crosspiece (91) by an arm (20) pivoting around an axis parallel to the rotation axis of the spreading disc (8) and orthogonal to the longitudinal axis of the crosspiece (91).

8. The spreading facility (1) according to one of the preceding claims, **characterized in that** the spreading discs (8) are, via the support frame (9), mounted at a variable distance from the bottom (3) of the hopper (2), and are able to go, via the support frame (9), from a position separated from the bottom (3) of the hopper (2) to a position close to the bottom (3) of the hopper (2), or vice versa.

9. The spreading facility (1) according to the preceding claim, combined with one of claims 6 or 7, **characterized in that**, for a mounting with variable separation of the spreading discs (8) from the bottom (3) of the hopper (2), the upright (92) of the support frame (9) has an adjustable length.

10. The spreading facility (1) according to one of the preceding claims,
**characterized in that** two of the side walls (4) of the hopper extend opposite one another and are able to form, for one, the front or leading wall (41), for the other, the rear or trailing wall (42), of the hopper (2) in the driven state of said assembly (11) along the guide path (13), and **in that** the spreading discs (8) are mounted adjustable in position along the front/back direction relative to the movement direction of the hopper (2) in the direction coming closer to or further from one of the front (41) or rear (42) walls of said hopper (2).

11. The spreading facility (1) according to the preceding claim, combined with one of claims 6 or 7, **characterized in that**, for mounting of the spreading discs (8) on the support frame (9) in a position-adjustable manner along the front/back direction, relative to the movement direction of the hopper (2), in the direction coming closer to or further from one of the front (41) or rear (42) walls of said hopper (2), the upright (92) of the support frame (9) assumes the shape of an L and the crosspiece (91) of the support frame (9), which extends transversely to the horizontal branch (921) of the L, is mounted sliding along said horizontal branch (921) of the L in the direction coming closer to or further from the vertical branch (922) of the L.

12. The spreading facility (1) according to one of the preceding claims,
**characterized in that** the means (10) for rotating the spreading discs (8) comprise two motors each coupled to a spreading disc (8).

13. The spreading facility (1) according to one of the preceding claims,
**characterized in that** the bottom part (3) of the hopper (2) assumes the general form of two funnels arranged side by side, the mouths of said funnels respectively forming the discharge openings (5) of the hopper (2).

14. The spreading facility (1) according to one of claims 1 to 10,
**characterized in that** it comprises, for at least one of the spreading discs (8), a deflector (50) comprising a low circular wall (502, 503, 504) surrounding the face equipped with at least one blade (81) of the disc (8), disc (8) and low wall (502, 503, 504) being coaxial, said low wall (502, 503, 504) being a discontinuous low wall to arrange at least one opening forming an outlet through which the bedding materials, able to be moved by the blade (81) of the disc (8), are able to be discharged from the enclosure delimited by the low wall (502, 503, 504).

15. The spreading facility (1) according to claim 14,
**characterized in that** the low wall (502, 503, 504) is stationary in the rotated state of the associated spreading disc (8).

16. A spreading method using a spreading facility according to one of claims 1 to 15,
**characterized in that** said method comprises:
- a step for moving the assembly (11) in the rotated state of the spreading discs (8) and open state of the discharge openings (5), and
- a step for moving the assembly (11) in the rotated state of the spreading discs (8) and open state of at least one of the emptying outlets (14).
